# EUROPEAN PATENT SPECIFICATION

(11) **EP 1 691 085 B1**
(45) Date of publication and mention of the grant of the patent: **01.08.2007**
(21) Application number: 05100938.9
(22) Date of filing: 10.02.2005
(51) Int. Cl.: F16B 7/04, F16B 9/02

(54) **Mounting assembly**
Montageanordnung
Ensemble de montage

(43) Date of publication of application: 16.08.2006
(73) Proprietor: Hamstra B.V., 1311 XC Almere (NL)
(72) Inventor: Montijn, Frederic Alexander, 1223 BN, Hilversum (NL)
(74) Representative: Voncken, Bartholomeus Maria Ch.

(56) References cited:
- DE-A1- 19 854 895
- GB-A- 2 170 050
- US-B1- 6 305 870

## Description

The invention relates to a mounting assembly for mounting an object to a support, according to the preamble of claim 1. Such a mounting assembly is known from the state of the art, e.g. from US-B-6, 305, 870.

The state of the art describes many other mounting assemblies for mounting an object to a support.

It is an object of the present invention to provide an improved mounting assembly for mounting an object to a support, and especially a mounting assembly which can be used at locations which are not readily accessable.

Thus, in correspondence with the present invention, a mounting assembly for mounting an object to a support comprises a bracket comprising a planar body and a mounting foot connected to said body and extending substantially perpendicularly thereto and meant for attachment to the support, a first recess in said object for slidingly receiving said planar body of the bracket, and is characterised by a locking member comprising a planar body, a second recess in said object intersecting said first recess for slidingly receiving said planar body of the locking member, wherein the planar bodies of the bracket and the locking member comprise cooperating locking means for preventing a sliding movement of the bracket in and out of the first recess in a first position of the locking member and for allowing such a sliding movement of the bracket in a second position of the locking member.

The mounting foot of the bracket will be attached to the support, for example by means of screws passing through holes in said mounting foot. Next, the body is manipulated in such a manner that its first recess is aligned with the planar body of the bracket and receives said planar body. At this moment the locking member is in a position in which its locking means do not cooperate with corresponding locking means of the bracket. When the planar body of the bracket is completely introduced into the first recess, the locking member is manipulated in its second recess in such a manner, that its locking means will lockingly cooperate with the locking means of the bracket, such as to prevent a movement of the bracket out of the first recess.

However, when the object has to be removed again from the support, firstly the locking member is moved in its second recess towards a position in which its locking means do not engage the locking means of the bracket, such that the bracket can move out of the first recess.

It is noted, that the position in which the locking member allows a sliding movement of the bracket in and out of the fist recess can be a position, in which the locking means still is partly housed in the second recess, but also may be a position in which it is removed completely from the second recess.

In a preferred embodiment of the mounting assembly in accordance with the present invention at least the first recess extends entirely through said object and is shaped in such a manner that the planar body of the bracket can be introduced therein from both sides. As a result of such a symmetrical shape of at least the first recess, the body can be assembled to the support in at least two different manners. Of course it is, in a corresponding manner, possible too that also the second recess extends entirely through said object and is shaped in such a manner, that the planar body of the locking member can be introduced therein from both sides. In such a manner it can be guaranteed, that, irrespective the position of the object relative to the support, the locking member is always readily accessible.

Further it is preferred, that the shape of the first and second recesses is such, that the position of the planar bodies of the bracket and of the locking member can be exchanged.

Such an embodiment allows still further alternative positionings of the object relative to the support.

In still a further preferred embodiment the first recess intersects the second recess perpendicularly. In such an embodiment the constructional features are less complicated than would be the case if the first recess would intersect the second recess non-perpendicularly.

Further an embodiment is proposed, in which the cooperating locking means comprise projections and recesses. Such projections and recesses define extremely simple, yet nevertheless reliable means of ensuring the locking function.

In accordance with another preferred embodiment of the mounting assembly in accordance with the present invention, the planar body of the bracket comprises at least one recess in one of its longitudinal edges, whereas the planar body of the locking member comprises a cooperating projection.

In such an embodiment, the locking member will be moved into its second recess until its projection engages the recess of the bracket. Moving the locking member in an opposite sense will free the bracket for a movement out of its first recess.

However, the operation of the mounting assembly can be further improved, when the planar body of the bracket comprises a recess in both its longitudinal edges, whereas the planar body of the locking member comprises two respective projections facing towards each other, and wherein the part of the planar body of the locking member connecting both projections bridges the planar body of the bracket, and wherein further the smallest distance between the projections is larger then the greatest width of the planar body of the bracket between both its longitudinal edges.

With such an embodiment, the mounting sequence will be as follows: firstly the locking member is introduced into its second recess that far, that the planar body of the bracket can be moved between the projections of the planar body of the locking member. When the bracket has been moved fully into the first recess (in which position its recesses will be positioned between the projections of the locking member) the locking member can be moved towards a position, in which one of its projections engages the corresponding recess of the bracket. In one of these engaging positions (in which a first one of the projections engages its corresponding recess) the locking member will slightly project from its second recess, whereas in the other engaging position the other projection will engage its corresponding recess and the locking member will be housed maximally in the second recess. The first position may be used during assembly, whereas the second position corresponds with the fully mounted position.

Preferably, the locking member and object are provided with cooperating snap members for defining certain positions of the locking member, such as for example the positions in which one of said projections engages a corresponding recess of the planar body of the bracket and the position in which none of said projections engages its corresponding recess.

Such cooperating snap members define such positions in an extremely handy manner, thus further simplifying the mounting sequence of the mounting assembly.

When, in accordance with yet another preferred embodiment of the mounting assembly in accordance with the present invention, the projections and recesses comprise cooperating bevelled sides, the projections and recesses will disengage automatically when a load exerted onto the bracket exceeds a certain level, for example when one tries to disassemble the mounting assembly in a wrong way. Like this, damaging the mounting assembly can be prevented.

Although in the above embodiments have been described in which the locking member comprises projections and the bracket comprises recesses, it also could be the other way around.

Further, preferably the recesses are shaped as undercut grooves in a frontal surface of the object. As a result, the complete mounting assembly only occupies a very reduced amount of space.

Such a use of space could still further be reduced when the planar bodies of the bracket and the locking member are thin strip like bodies.

For further simplifying the mounting sequence of the mounting assembly in accordance with the present invention, the mounting foot of the bracket could comprise an adhesive layer for cooperation with the support. After positioning the bracket into the first recess, the object is brought into its desired position onto the support, as a result of which the adhesive layer on the mounting foot of the bracket will adhere to the support. Next the body is carefully removed, such that the bracket will slide out of the first recess while remaining adhered to the support. After the entire removal of the object, a conventional mounting means, such as a screw, can be used to firmly attach the bracket to the support. Finally, the object is again slid over the bracket, whereafter the locking member will be used for locking the bracket in its final position.

Preferably, the adhesive layer initially is covered by a removable layer of a protective material. As a result, the adhesive layer will not get stained before its definitive use.

A preferred use of the mounting assembly according to the present invention is such a use, in which the object is a housing for a winding shaft of a roller screen mechanism, wherein in both opposite frontal ends of the housing said first and second recesses are defined.

Hereinafter the invention will be elucidated while referring to the drawing.
Figure 1 shows, schematically, a mounting assembly according to a first embodiment, previous to mounting;
figure 2 shows a locking member of the mounting assembly of figure 1, upside down;
figure 3 shows the mounting assembly of figure 1 during mounting;
figure 4 shows the mounting assembly of figure 1, with the mounting nearly complete;
figure 5 shows an alternative locking member in a view corresponding to figure 2;
figure 6 shows a second embodiment of a mounting assembly, partly and prior to mounting;
figure 7 shows schematically a possible cooperation between a bracket and locking member, and
figure 8 shows schematically an elevational view of a roller screen mechanism provided with mounting assemblies in accordance with the present invention.

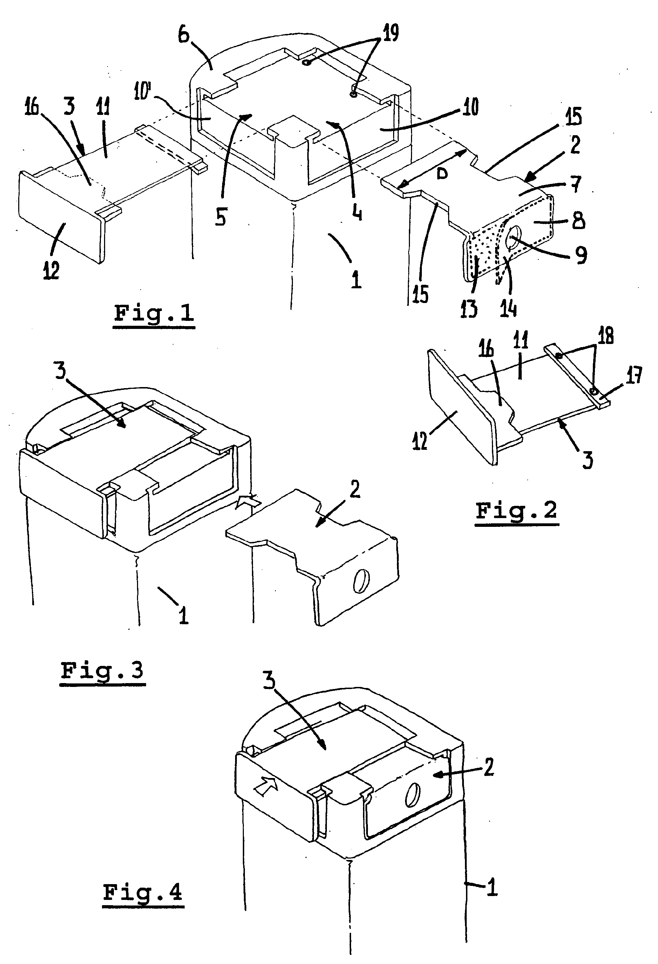

Firstly referring to figure 1, a mounting assembly for mounting an object 1 to a support (not illustrated) is shown. Basically said mounting assembly comprises a bracket 2, a locking member 3, a first recess 4 in said object 1 for slidingly receiving the bracket 2 and a second recess 5 in said object 1 for slidingly receiving the locking member 3.

The recesses 4 and 5 are, as illustrated, at least partially shaped as undercut grooves in a frontal surface 6 of the object 1. Further it appears, that the first recess 4 intersects the second recess 5 perpendicularly.

The bracket comprises a planar body 7 which, in the illustrated embodiment, is shaped as a thin strip-like body. A mounting foot 8 is connected to said body 7 and extends substantially perpendicularly thereto. The mounting foot 8 is meant for attachment to a support, and therefore comprises, in the illustrated embodiment, a hole 9 through which a screw or alike can pass.

The dimensions of the planar body 7 closely match the dimensions of the first recess 4. Further the object 1 comprises a first depression 10 which is meant for accommodating the mounting foot 8 of the bracket 2.

The locking member 3 also comprises a planar body 11 (in the present embodiment again a thin strip like body). A grip 12 is attached to the planar body 11. Said grip 12 can be accomodated in a depression 10' of the object 1.

As illustrated in figure 1 by dotted lines, an adhesive layer 13 may be applied to the mounting foot 8 of the bracket 2, which adhesive layer 13 initially is covered by a protective layer 14 which can be peeled away.

Finally figure 1 shows, that in both longitudinal edges of the planar body 7 of the bracket 2 recesses 15 are formed. For cooperation with at least one of these recesses 15 the locking member 3 comprises at least one projection 16 which can be seen most clearly in the reversed view in accordance with figure 2.

The mounting assembly illustrated in figure 1 may be used in the following manner. Firstly the bracket 2 is attached to a support, for example by means of a screw (not illustrated) passing through the hole 9. The locking member 3 is introduced into its second recess 5 as illustrated in figure 3 just that far, that thereafter the planer body 7 of the bracket 2 can pass between the projection 16 of the locking member 3 and an opposite end part 17 thereof (see figure 2). Then the position in accordance with figure 4 is reached, in which the locking member 3 is completely pushed into the recess in accordance with arrow 18, in which completely introduced position the projection 16 of the locking member 3 will engage into a corresponding recess 15 of the bracket 2, thus locking the bracket 2 in the object 1.

Cooperating snap members could be provided on the locking member 3 and object 1 to keep the locking member 3 in its operative position (such as elevations 18 on the end part 17 of the locking member 3 and corresponding depressions 19 in the second recess 5). However, also any other means for reliably maintaining the locking member 3 in its operative position are conceivable.

The adhesive layer 13 on the mounting foot 8 enables an extremely effective use of the mounting assembly. Before assembling the mounting assembly as discussed above, firstly the bracket 2 could be introduced into the first recess 4, and the protective layer 14 could be removed from the adhesive layer 13. Then the object 1 could be positioned at its desired location, as a result of which the adhesive layer 13 will adhere to the support at the correct position. Then the object 1 is carefully removed, as a result of which the bracket 2 slides out of the first recess 4. Then a screw could be passed through the hole 9 and the entire process as discussed above could be carried out.

A further feature of the mounting assembly can be, that the shape of the first and second recesses 4 and 5, respectively, is such, that the position of the bracket 2 and locking member 3 can be exchanged (this means that, in the embodiment illustrated in figure 1, the bracket 2 would be introduced into the second recess 5, whereas the locking member 3 would be introduced into the first recess 4).

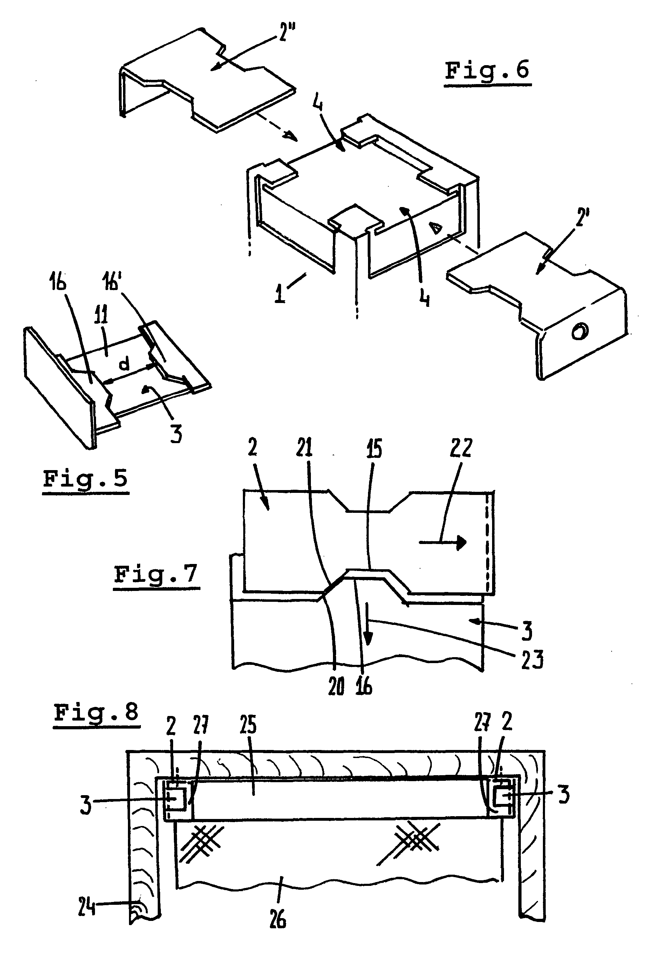

Further, as illustrated in figure 6, it is possible that the first recess 4 extends entirely through said object 1, and is shaped in such a manner that the planar body of the bracket can be introduced therein from both sides (as illustrated by brackets 2' and 2" in figure 6). In such an embodiment the provision of recesses 15 at both longitudinal edges of the planar body 7 (see figure 1) comes of use, because different recesses 15 will cooperate with the projection 16 of the locking member 3 when the bracket 2 is introduced into the recess 4 from opposite sides.

As illustrated in figure 5, the locking member 3 also can comprise two projections 16 and 16', wherein the part of the planar body 11 connecting both projections 16 and 16'will bridge the planar body 7 of the bracket 2 in the mounted position of the mounting assembly (this will also apply for the embodiment of the locking member 3 illustrated in figure 2). The smallest distance d (figure 5) should be larger than the greatest width D (figure 1) of the planar body 7 of the bracket 2, such that in a proper position of the locking member 3 in its second recess 5 the planar body 7 of the bracket 2 can pass between said projections 16 and 16'. When the locking member 2 is shaped as illustrated in figure 5, projection 16 can cooperate with one recess 15, whereas the opposite projection 16' can cooperate with the opposite recess 15.

As appears clearly from the figures, and as has been represented again schematically in figure 7, the projections 16 and recesses 15 comprise cooperating bevelled sides 20 and 21. When an extreme load is applied onto the bracket 2 causing a movement 22 thereof, such cooperating bevelled sides will induce a corresponding movement 23 of the locking member 3, such that the locking engagement will be ended. Such a process helps preventing damage to the mounting assembly when one tries to remove the bracket 2 with a large force without firstly removing the locking member 3 (for example when a person not familiar with the operation of the mounting assembly tries to remove the object 1 from the support).

Finally figure 8 shows an illustrative use of the mounting assembly in accordance with the present invention. Within a door frame or window frame 24 a housing 25 of a roller screen mechanism with screen 26 is positioned. Two end caps 27 define objects in the sense of the present invention, which by means of brackets 2 and locking members 3 are mounted to the frame 24.

## Claims

1. Mounting assembly for mounting an object (1) to a support, comprising a bracket (2) comprising a planar body (7) and a mounting foot (8) connected to said body (7) and extending substantially perpendicularly thereto and meant for attachment to the support, a first recess (4) in said object (1) for slidingly receiving said planar body (7) of the bracket, **characterized by** a locking member (3) comprising a planar body (11), a second recess (5) in said object (1) intersecting said first recess (4) for slidingly receiving said planar body (11) of the locking member (3), wherein the planar bodies of the bracket and the locking member comprise cooperating locking means (15, 16) for preventing a sliding movement of the bracket in and out of the first recess (4) in a first position of the locking member (3) and for allowing such a sliding movement of the bracket in a second position of the locking member (3).

2. Mounting assembly according to claim 1, wherein at least the first recess (4) extends entirely through said object (1) and is shaped in such a manner that the planar body (7) of the bracket (2) can be introduced therein from both sides.

3. Mounting assembly according to claim 1 or 2,
wherein the shape of the first and second recesses (4,5) is such, that the position of the planar bodies of the bracket (2) and of the locking member (3) can be exchanged.

4. Mounting assembly according to any of the previous claims, wherein the first recess (4) intersects the second recess (5) perpendicularly.

5. Mounting assembly according to any of the previous claims, wherein the cooperating locking means (15,16) comprise projections and recesses.

6. Mounting assembly according to claim 5, wherein the planar body (7) of the bracket (2) comprises at least one recess in one of its longitudinal edges, whereas the planar body (11) of the locking member (3) comprises a cooperating projection.

7. Mounting assembly according to claim 6, wherein the planar body (7) of the bracket (2) comprises a recess in both its longitudinal edges, whereas the planar body (11) of the locking member (3) comprises two respective projections facing towards each other, and wherein the part of the planar body of the locking member connecting both projections bridges the planar body of the bracket, and wherein further the smallest distance between the projections is larger then the greatest width of the planar body of the bracket between both its longitudinal edges.

8. Mounting assembly according to claim 7, wherein the locking member (3) and object (1) are provided with cooperating snap members for defining certain positions of the locking member, such as for example the positions in which one of said projections engages a corresponding recess of the planar body (7) of the bracket (2) and the position in which none of said projections engages its corresponding recess.

9. Mounting assembly according to any of the claims 5-8, wherein the projections and recesses comprise cooperating bevelled sides.

10. Mounting assembly according to any of the claims 5-9, wherein the position of the projections and recesses is exchanged.

11. Mounting assembly according to any of the previous claims, wherein the recesses are shaped as undercut grooves in a frontal surface of the object.

12. Mounting assembly according to any of the previous claims, wherein the planar bodies (7,11) of the bracket (2) and the locking member (3) are thin striplike bodies.

13. Mounting assembly according to any of the previous claims, wherein the mounting foot (8) of the bracket (2) comprises an adhesive layer for cooperation with the support.

14. Mounting assembly according to claim 13,
wherein the adhesive layer initially is covered by a removable layer of a protective material.

15. Mounting assembly according to any of the pre-vious claims, wherein the object (1) is a housing for a winding shaft of a roller screen mechanism, wherein in both opposite frontal ends of the housing said first and second recesses are defined.

## Patentansprüche

1. Montageanordnung zur Montage eines Objektes (1) an einem Träger, die eine Halterung (2), die einen planaren Körper (7) und einen mit dem Körper (7) verbundenen und sich im Wesentlichen senkrecht zu diesem erstreckenden Montagefuß (8) zur Anbringung an dem Träger aufweist, und eine erste in dem Objekt (1) ausgebildete Ausnehmung (4) zum verschiebbaren Aufnehmen des planaren Körpers (7) der Halterung aufweist, **gekennzeichnet durch** ein Verriegelungselement (3), das einen planaren Körper (11) aufweist, und eine zweite in dem Objekt (1) ausgebildete und die erste Ausnehmung (4) überschneidende Ausnehmung (5) zum verschiebbaren Aufnehmen des planaren Körpers (11) des Verriegelungselements (3), wobei der planare Körper der Halterung und der planare Körper des Verriegelungselements zusammenwirkende Verriegelungsmittel (15, 16) aufweisen, um in einer ersten Position des Verriegelungselements (3) eine Verschiebebewegung der Halterung in und aus der ersten Ausnehmung (4) zu verhindern und in einer zweiten Position des Verriegelungselements (3) eine solche Verschiebebewegung der Halterung zu ermöglichen.

2. Montageanordnung nach Anspruch 1, wobei sich zumindest die erste Ausnehmung (4) vollständig durch das Objekt (1) hindurch erstreckt und derart gestaltet ist, dass der planare Körper (7) der Halterung (2) von beiden Seiten darin eingebracht werden kann.

3. Montageanordnung nach Anspruch 1 oder 2, wobei die Form der ersten Ausnehmung (4) und der zweiten Ausnehmung (5) derart ist, dass der planare Körper der Halterung (2) und der planare Körper des Verriegelungselements (3) vertauscht werden können.

4. Montageanordnung nach einem der vorhergehenden Ansprüche, wobei die erste Ausnehmung (4) die zweite Ausnehmung (5) senkrecht überschneidet.

5. Montageanordnung nach einem der vorhergehenden Ansprüche, wobei die zusammenwirkenden Verriegelungsmittel (15, 16) Auskragungen und Ausnehmungen aufweisen.

6. Montageanordnung nach Anspruch 5, wobei der planare Körper (7) der Halterung (2) zumindest eine Ausnehmung in einer seiner Längskanten aufweist, wohingegen der planare Körper (11) des Verriegelungselements (3) eine zusammenwirkende Auskragung aufweist.

7. Montageanordnung nach Anspruch 6, wobei der planare Körper (7) der Halterung (1) eine Ausnehmung in beiden seiner Längskanten aufweist, wohingegen der planare Körper (11) des Verriegelungselements (3) zwei entsprechende Auskragungen aufweist, die einander zugewandt sind, und wobei der Abschnitt des planaren Körpers des beide Auskragungen verbindenden Verriegelungselements den planaren Körper der Halterung überbrückt, und wobei ferner der kleinste Abstand zwischen den Auskragungen größer als die größte Breite des planaren Körpers der Halterung zwischen seinen beiden Längskanten ist.

8. Montageanordnung nach Anspruch 7, wobei das Verriegelungselement (3) und das Objekt (1) mit zusammenwirkenden Schnappelementen versehen sind, um bestimmte Positionen des Verriegelungselements zu definieren, wie beispielsweise die Positionen, in welchen eine der Auskragungen mit einer korrespondierenden Ausnehmung des planaren Körpers (7) der Halterung (2) in Eingriff steht, und die Position, in welcher keine der Auskragungen mit ihren korrespondierenden Ausnehmungen in Eingriff steht.

9. Montageanordnung nach einem der Ansprüche 5-8, wobei die Auskragungen und Ausnehmungen zusammenwirkende abgeschrägte Seiten aufweisen.

10. Montageanordnung nach einem der Ansprüche 5-9, wobei die Position der Auskragungen und der Ausnehmungen vertauscht ist.

11. Montageanordnung nach einem der vorhergehenden Ansprüche, wobei die Ausnehmungen als Hinterschneidungsnuten in einer stirnseitigen Fläche des Objekts gestaltet sind.

12. Montageanordnung nach einem der vorhergehenden Ansprüche, wobei der planare Körper (7) der Halterung (2) und der planare Körper (11) des Verriegelungselements(3) dünne streifenartige Körper sind.

13. Montageanordnung nach einem der vorhergehenden Ansprüche, wobei der Befestigungsfuß (8) der Halterung (2) eine Haftschicht zum Zusammenwirken mit dem Träger aufweist.

14. Montageanordnung nach Anspruch 13, wobei die Haftschicht anfänglich von einer entfernbaren Schicht eines Schutzmaterials bedeckt ist.

15. Montageanordnung nach einem der vorhergehenden Ansprüche, wobei das Objekt (1) ein Gehäuse für eine Wickelwelle eines Rollo-Mechanismus ist, wobei in beiden gegenüberliegenden stirnseitigen Enden des Gehäuses die erste Ausnehmung und die zweite Ausnehmung definiert sind.

## Revendications

1. Ensemble de montage prévu pour le montage d'un objet (1) sur un support, comprenant une équerre de fixation (2) comportant un corps plan (7) et une base de montage (8) reliée audit corps (7) et s'étendant sensiblement perpendiculairement à celui-ci, et destinée à une fixation sur le support, un premier évidement (4) dans ledit objet (1) pour recevoir de façon coulissante ledit corps plan (7) de l'équerre de fixation, **caractérisé par** un élément de verrouillage (3) comprenant un corps plan (11), un deuxième évidement (5) dans ledit objet (1) coupant ledit premier évidement (4) afin de recevoir de façon coulissante ledit corps plan (11) de l'élément de verrouillage (3), dans lequel les corps plans de l'équerre de fixation et de l'élément de verrouillage comprennent des éléments de verrouillage (15, 16) qui coopèrent pour prévenir un mouvement de glissement de l'équerre de fixation dans le premier évidement (4) ou hors de celui-ci dans une première position de l'élément de verrouillage (3), et pour permettre un tel mouvement de glissement de l'équerre de fixation dans une seconde position de l'élément de verrouillage (3).

2. Ensemble de montage selon la revendication 1, dans lequel au moins le premier évidement (4) s'étend complètement d'un bout à l'autre dudit objet (1) et présente une forme telle que le corps plan (7) de l'équerre de fixation (2) puisse y être introduit à partir des deux côtés.

3. Ensemble de montage selon la revendication 1 ou 2, dans lequel la forme des premier et deuxième évidements (4, 5) est telle que la position des corps plans de l'équerre de fixation (2) et de l'élément de verrouillage (3) puisse être permutée.

4. Ensemble de montage selon l'une quelconque des revendications précédentes, dans lequel le premier évidement (4) coupe perpendiculairement le deuxième évidement (5).

5. Ensemble de montage selon l'une quelconque des revendications précédentes, dans lequel les éléments de verrouillage à coopération (15, 16) comprennent des protubérances et des évidements.

6. Ensemble de montage selon la revendication 5, dans lequel le corps plan (7) de l'équerre de fixation (2) comprend au moins un évidement dans l'un de ses bords longitudinaux, tandis que le corps plan (11) de l'élément de verrouillage (3) présente une protubérance de forme complémentaire.

7. Ensemble de montage selon la revendication 6, dans lequel le corps plan (7) de l'équerre de fixation (2) comprend un évidement dans ses deux bords longitudinaux, tandis que le corps plan (11) de l'élément de verrouillage (3) présente deux protubérances respectives situées face à face, et dans lequel la partie du corps plan de l'élément de verrouillage, qui relie les deux protubérances, s'étend d'un bout à l'autre du corps plan de l'équerre de fixation, et dans lequel, en outre, la plus petite distance entre les protubérances est supérieure à la plus grande largeur du corps plan de l'équerre de fixation, entre ses deux bords longitudinaux.

8. Ensemble de montage selon la revendication 7, dans lequel l'élément de verrouillage (3) et l'objet (1) sont pourvus d'éléments d'enclenchement, qui coopèrent pour définir certaines positions de l'élément de verrouillage, par exemple les positions dans lesquelles l'une desdites protubérances pénètre dans un évidement correspondant du corps plan (7) de l'équerre de fixation (2), et la position dans laquelle aucune desdites protubérances ne pénètre dans l'évidement correspondant.

9. Ensemble de montage selon l'une quelconque des revendications 5 à 8, dans lequel les protubérances et les évidements présentent des côtés biseautés qui coopèrent.

10. Ensemble de montage selon l'une quelconque des revendications 5 à 9, dans lequel la position des protubérances et des évidements est permutée.

11. Ensemble de montage selon l'une quelconque des revendications précédentes, dans lequel les évidements sont des échancrures ménagées dans une surface frontale de l'objet.

12. Ensemble de montage selon l'une quelconque des revendications précédentes, dans lequel les corps plans (7, 11) de l'équerre de fixation (2) et de l'élément de verrouillage (3) sont des corps minces éléments du type languette.

13. Ensemble de montage selon l'une quelconque des revendications précédentes, dans lequel la base de montage (8) de l'équerre de fixation (2) comporte une couche adhésive pour une coopération avec le support.

14. Ensemble de montage selon la revendication 13, dans lequel la couche adhésive est initialement recouverte par une couche pelable en une matière de protection.

15. Ensemble de montage selon l'une quelconque des revendications précédentes, dans lequel l'objet (1) est un boîtier pour un arbre d'enroulement d'un mécanisme de store, dans lequel lesdits premier et deuxième évidements sont définis dans les deux extrémités frontales opposées du boîtier.
